Europäisches Patentamt

European Patent Office

Office européen des brevets

(11) Veröffentlichungsnummer: **0 195 312**
B1

# EUROPÄISCHE PATENTSCHRIFT

(45) Veröffentlichungstag der Patentschrift:
28.02.90

(21) Anmeldenummer: 86102889.2

(22) Anmeldetag: 05.03.86

(51) Int. Cl.⁴: **B23C 3/12**

(54) Manipulatorkopf mit Bearbeitungswerkzeug für Rohre oder Rohrleitungen.

(30) Priorität: 19.03.85 DE 3510288

(43) Veröffentlichungstag der Anmeldung:
24.09.86 Patentblatt 86/39

(45) Bekanntmachung des Hinweises auf die Patenterteilung:
28.02.90 Patentblatt 90/9

(84) Benannte Vertragsstaaten:
CH DE IT LI SE

(56) Entgegenhaltungen:
EP-A- 0 061 078
FR-A- 1 391 176
GB-A- 2 091 611
US-A- 3 293 963
US-A- 3 859 877

(73) Patentinhaber: Siemens Aktiengesellschaft,
Wittelsbacherplatz 2, D-8000 München 2(DE)

(72) Erfinder: Förner, Siegfried, Leipziger Strasse 69,
D-8520 Erlangen(DE)
Erfinder: Gebald, Georg, Ahornweg 11,
D-8551 Kirchehrenbach(DE)

## Beschreibung

Die Erfindung liegt auf dem Gebiet der Service-Technik für Rohranlagen und ist bei der konstruktiven Ausgestaltung eines Manipulatorkopfes anzuwenden, der fernbedient allein oder gemeinsam mit einem Manipulatorfahrzeug (Schreitwerk oder motorgetriebene Antriebsräder) im Innern eines Rohres oder einer Rohrleitung positionierbar und zur Bearbeitung der Innenoberfläche des Rohres oder der Rohrleitung mit einem Werkzeug bestückt ist.

Ein bekannter Manipulatorkopf dieser Art ist mit einem Schreitwerk gekoppelt und besteht im wesentlichen aus zwei Stützflanschen, die mit radial angeordneten Führungselementen zur rollenden Fortbewegung des Manipulatorkopfes versehen sind, weiterhin aus einem Werkzeugträger, der die beiden Stützflansche axial verbindet und der in den Stützflanschen drehbar gelagert ist, und aus einem an dem Werkzeugträger verschiebbar befestigten, sich drehenden Werkzeug (Schleifscheibe) zur mechanischen Bearbeitung der Innenwand des Rohres oder der Rohrleitung. Auf dem Werkzeugträger sind dabei eine erste Antriebseinrichtung zur Axialverschiebung des Werkzeuges, eine zweite Antriebseinrichtung zur radialen Zustellung des Werkzeuges und eine dritte Antriebseinrichtung für die Arbeitsbewegung des Werkzeuges angeordnet. Weiterhin ist an dem einen Stützflansch eine vierte Antriebseinrichtung zum Drehen des Werkzeugträgers relativ zu den Stützflanschen vorgesehen (EP-A 0 061 078).

Ausgehend von einem Manipulatorkopf mit den Merkmalen des Oberbegriffes des Anspruches 1 liegt der Erfindung die Aufgabe zugrunde, den Manipulatorkopf so auszugestalten, daß als Werkzeug ein Fingerfräser eingesetzt werden kann. Ein derartiges Werkzeug ist beispielsweise erforderlich, um Fehlerstellen an Schweißnähten auszuarbeiten.

Zur Lösung dieser Aufgabe ist gemäß der Erfindung vorgesehen,
daß der Werkzeugträger aus einem rohrförmigen, mit Montageöffnungen versehenen Tragrahmen mit zwei stirnseitig anschließenden Lagerflanschen besteht,
daß an der Innenwandung des Tragrahmens eine axial verlaufende Führungsschiene befestigt ist, auf der ein mit der ersten Antriebseinrichtung gekoppelter Schlitten axial verfahrbar ist,
daß an dem axial verfahrbaren Schlitten eine weitere Führungsschiene befestigt ist, die parallel zu einer Radialen des Manipulatorkopfes verläuft und auf der ein mit der zweiten Antriebseinrichtung gekoppelter Schlitten radial verfahrbar ist,
daß an dem radial verfahrbaren Schlitten ein mit der dritten Antriebseinrichtung versehener Fingerfräser befestigt ist, wobei der Fingerfräser seitlich der Achse und koaxial mit einer Radialen des Manipulatorkopfes angeordnet und einer Montageöffnung des rohrförmigen Rahmens zugeordnet ist,
und daß die vierte Antriebseinrichtung ein Schneckengetriebe aufweist, dessen Schneckenrad auf der Außenseite des einen Stützflansches axial an dem nach außen weisenden Ende des einen Lagerflansches des rohrförmigen Rahmens befestigt ist und dessen Schnecke, Antriebsmotor und Untersetzungsgetriebe quer zur Achse des Manipulatorkopfes angeordnet sind, wobei der Antriebsmotor und das Untersetzungsgetriebe in Lagerböken gelagert sind, die das Schneckenrad übergreifen.

Eine derartige Ausgestaltung des Manipulatorkopfes trägt den großen Kräften Rechnung, die beim Betrieb des Fingerfräsers auftreten. So bewirken die hydraulisch betätigbaren Klemmvorrichtungen eine sichere Arretierung des Manipulatorkopfes im Rohr oder in der Rohrleitung während der Arbeitsphase. Die Ausgestaltung des Werkzeugträgers als rohrförmiger Rahmen ist eine verwindungssteife Rahmenkonstruktion. Die Führung des Fingerfräsers mit Schienen und Schlitten kann ebenfalls große Kräfte aufnehmen. Die Konstruktion der Antriebseinrichtung zum Drehen des rohrförmigen Rahmens berücksichtigt ebenfalls die beim Vorschub des Fingerfräsers in Umfangsrichtung auftretenden Kräfte und ist mit Rücksicht auf Rohrkrümmungen in Achsrichtung des Manipulatorkopfes so kurz und kompakt wie möglich aufgebaut.

In Weiterbildung der Erfindung können an dem radial verfahrbaren Schlitten zwei Fingerfräser mit jeweils einer eigenen Antriebseinrichtung symmetrisch zur Achse des Manipulatorkopfes befestigt sein. In diesem Fall werden Umrüstzeiten nach Abnutzung des einen Fingerfräsers verringert, d. h. es kann ohne eine wesentliche Unterbrechung des Bearbeitungsvorganges ein Ersatzfräser zum Einsatz kommen.

Mit Rücksicht auf die zum Fräsen erforderlichen Kräfte empfiehlt es sich, zum Antrieb des Fingerfräsers bzw. der Fingerfräser und zum Drehen des rohrförmigen Rahmens Hydraulikmotoren vorzusehen. Die Antriebseinrichtungen zum axialen und radialen Verfahren der Schlitten können dagegen jeweils aus einem Elektromotor mit einem Gewindespindel-Wandermutterantrieb bestehen, dessen Wandermutter in dem jeweiligen Schlitten gelagert ist. Zur Beherrschung der Führungskräfte zum Verschieben des Fingerfräsers ist es im übrigen sinnvoll, wenn die Führungsschienen und die Schlitten schwalbenschwanzförmig ineinander greifen.

Anstelle eines Fingerfräsers oder zusätzlich zu zwei Fingerfräsern können im übrigen an dem radial verfahrbaren Schlitten ein oder zwei an sich bekannte Prüfköpfe (Wirbelstromprüfköpfe) angeordnet sein, mit denen die zu bearbeitende Stelle (z.b. ein Anriß in einer Schweißnaht) geortet und nach ihrer Bearbeitung geprüft werden kann.

Ein Ausführungsbeispiel des neuen Manipulatorkopfes ist in der Zeichnung dargestellt. Dabei zeigt die Figur 1 einen Längsschnitt der Gesamtkonstruktion, Figur 2 eine spezielle Frontansicht eines Stützflansches, Figur 3 eine Frontansicht des Manipulatorkopfes auf den mit der vierten Antriebseinrichtung versehenen Stützflansch, die Figuren 4 und 5 Lagerböcke für den Motor und das Getriebe der vierten Antriebseinrichtung und Figur 6 einen Querschnitt durch den bestückten rohrförmigen Tragrahmen.

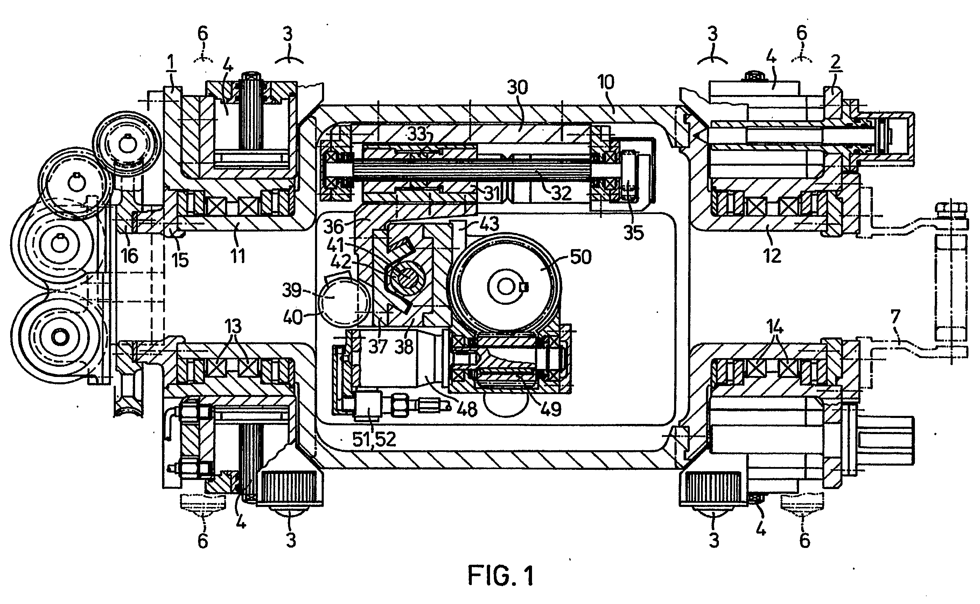

Figur 1 zeigt in Anlehnung an die aus der EP-A 0 061 078 bekannte Konstruktion einen Manipulatorkopf, der aus folgenden wesentlichen Baugruppen besteht:

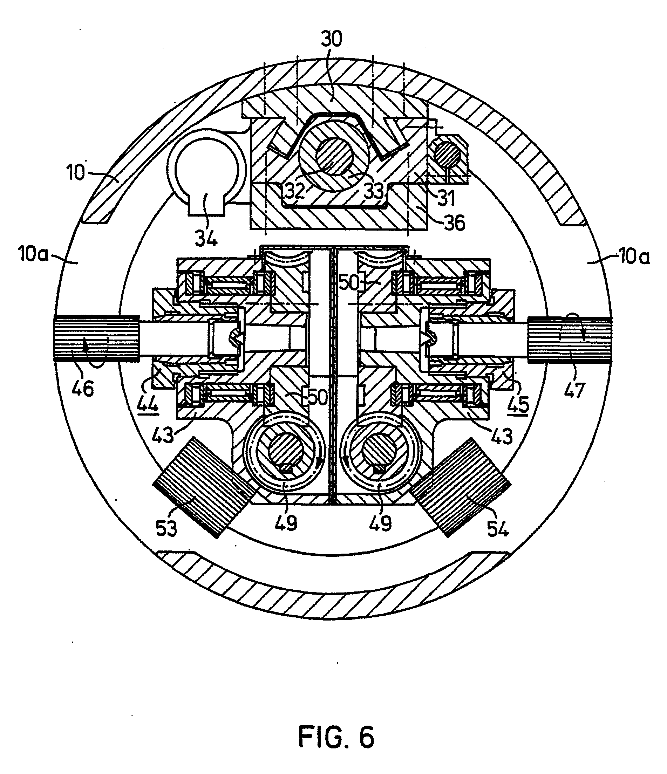

1. den Stützflanschen 1 und 2, die gemäß der bekannten Konstruktion mit Führungselementen 3 zur rollenden Fortbewegung des Manipulatorkopfes versehen sind;
2. einem Werkzeugträger in Form eines rohrförmigen Rahmens 10, der die beiden Stützflansche 1 und 2 starr miteinander verbindet und mit Hilfe von axial anschließenden Lagerflanschen 11 und 12 über die Lagerungen 13 und 14 in den Stützflanschen drehbar gelagert ist;
3. dem eigentlichen Bearbeitungswerkzeug in Form von Fräsköpfen 44 und 45 mit den Fingerfräsern 46 und 47 (Fig. 6). Die Fräsköpfe sind dabei axial und radial verschiebbar im Rahmen 10 gelagert.

Mit dem Stützflansch 2 ist ein Kupplungsteil 7 verbunden, an das ein Manipulatorfahrzeug, beispielsweise in Form eines Schreitwerkes, angekoppelt werden kann. Zu einem solchen Schreitwerk gehören auch die an den Stützflanschen vorgesehenen, pneumatisch radial ausfahrbaren Klemmvorrichtungen 4.

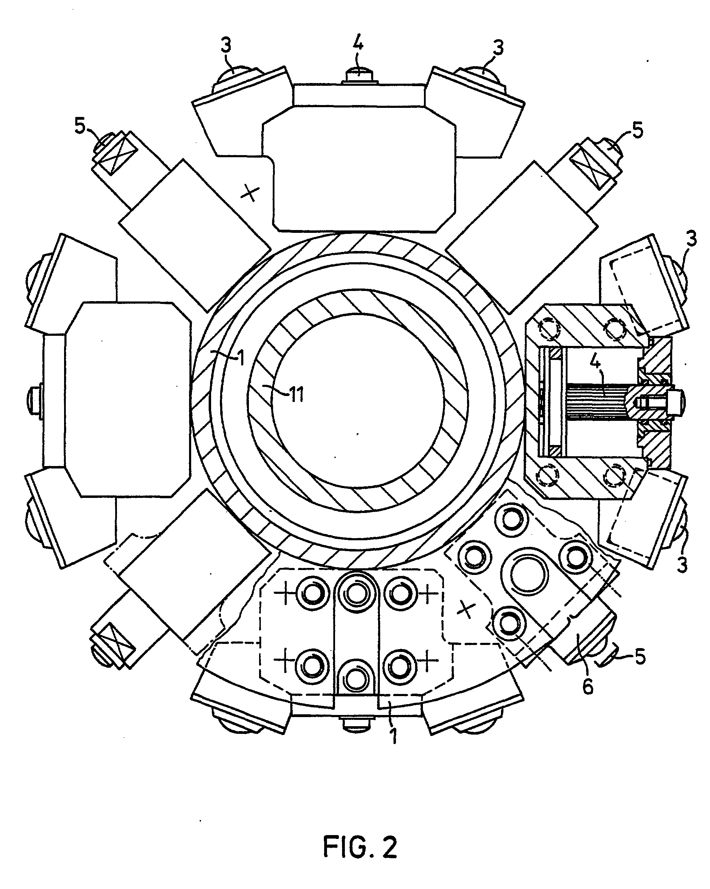

Zur Arretierung des Manipulatorkopfes in einem Rohr oder einer Rohrleitung während des Bearbeitungsvorganges sind gemäß Figur 2 zwischen den Führungselementen 3 zur rollenden Fortbewegung des Manipulatorkopfes und den Klemmvorrichtungen 4 weitere Klemmvorrichtungen 5 vorgesehen, die aus hydraulisch betätigbaren Spannbolzen bestehen. Im vorliegenden Fall sind vier solcher Spannbolzen gleichmäßig am Umfang der Stützflansche 1 und 2 verteilt angeordnet. - Bei dieser Anordnung von pneumatisch betätigbaren und von hydraulisch betätigbaren Klemmvorrichtungen ist es erforderlich, den Kranz der Führungselemente 3 axial versetzt zum Kranz der Klemmvorrichtungen 4 und 5 anzuordnen (Fig. 1). Um bei dieser Zuordnung von Führungselementen und Klemmvorrichtungen die Kurvengängigkeit des Manipulatorkopfes zu gewährleisten, ist ein zweiter Kranz von Führungselementen 6 vorgesehen, der auf der anderen Seite des Kranzes der Klemmvorrichtungen angeordnet ist. In Umfangsrichtung gesehen liegen die Führungselemente 6 auf den gleichen Radien wie die Klemmvorrichtungen 4 und 5, d. h. der Kranz der Führungselemente 3 ist auch in Umfangsrichtung versetzt zum Kranz der Führungselemente 6 angeordnet.

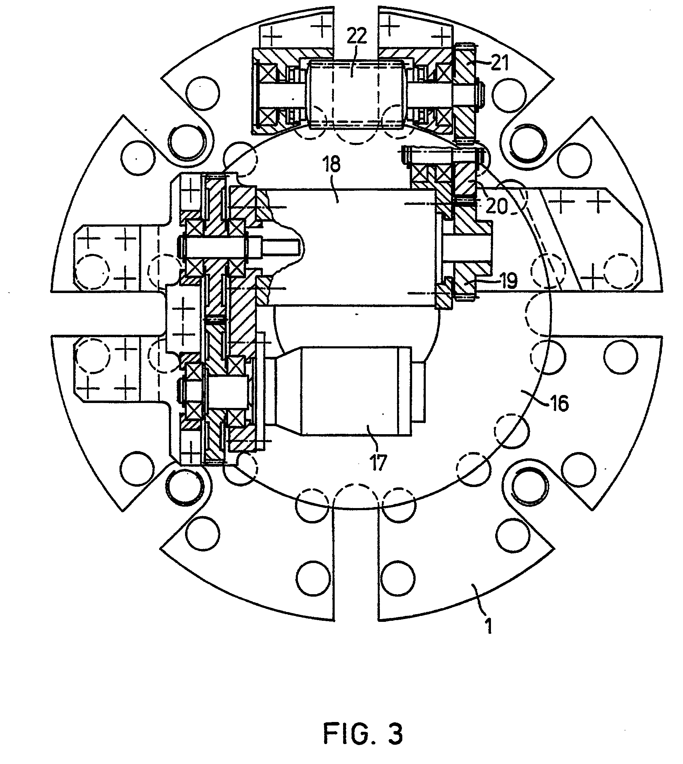

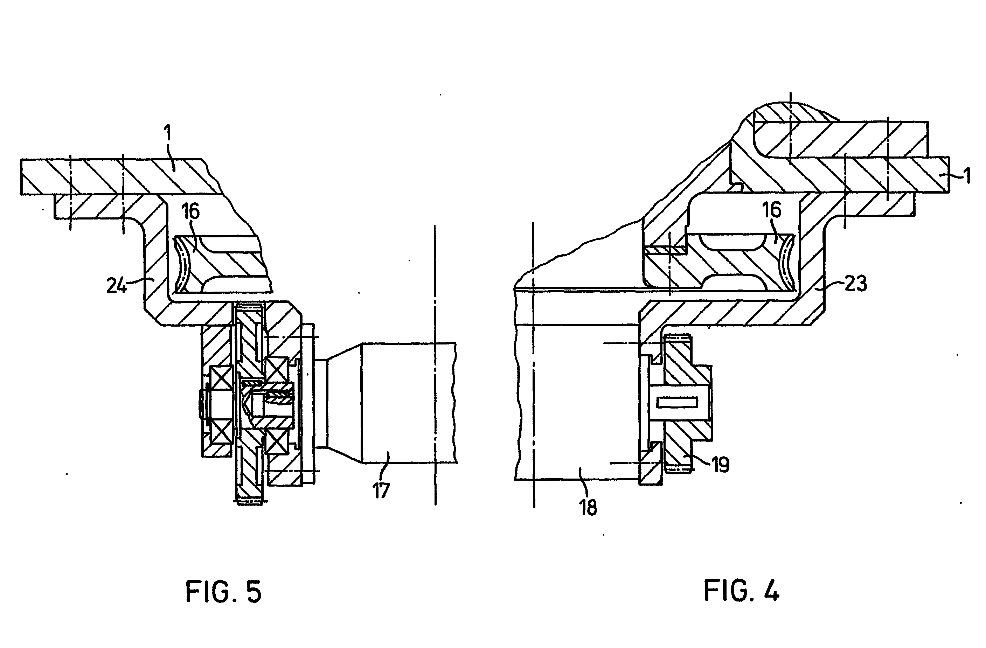

Zur Drehung des drehbar gelagerten, rohrförmigen Rahmens 10 ist an der Außenseite des Stützflansches 1 an das nach außen weisende Ende des Lagerflansches 11 über ein Zwischenstück 15 ein Schneckenrad 16 angeflanscht, dem die auf dem Stützflansch 1 befestigte vierte Antriebseinrichtung zugeordnet ist. Gemäß Figur 3 besteht diese Antriebseinrichtung aus einem Hydraulikmotor 17 mit einem nachgeschalteten gekapselten Untersetzungsgetriebe 18 und einem aus drei Zahnrädern 19, 20, 21 bestehenden Zahnradgetriebe mit der dem Zahnrad 21 zugeordneten Schnecke 22. Diese ist über entsprechende Lagerböcke direkt auf dem Stützflansch 1 gelagert. Bezüglich der Lagerung des Motors 17 und des Untersetzungsgetriebes 18 sind gemäß den Figuren 4 und 5 spezielle Lagerböcke 23 und 24 vorgesehen, die das Schneckenrad 16 übergreifen.

Gemäß den Figuren 1 und 6 ist in dem rohrförmigen Tragrahmen 10 eine in Achsrichtung des Manipulatorkopfes verlaufende Führungsschiene 30 für einen Axialschlitten 31 angeordnet, wobei Führungsschiene und Axialschlitten schwalbenschwanzförmig ineinander greifen. Der Antrieb des Axialschlittens 31 erfolgt über eine Gewindespindel 32, mit der der Axialschlitten über eine Wandermutter 33 in Eingriff steht, sowie mit Hilfe des parallel zur Gewindespindel angeordneten Motors 34 mit einem zwischengeschalteten Zahnradgetriebe 35.

Am Axialschlitten 31 ist eine Halterung 36 für eine zweite Führungsschiene 37 befestigt, die diagonal zum Manipulatorkopf bzw. parallel zu einer Diagonalen des Manipulatorkopfes und damit senkrecht zur Achse der Gewindespindel 32 verläuft. Dieser Führungsschiene ist der Radialschlitten 38 zugeordnet, wobei Führungsschiene und Radialschlitten ebenfalls schwalbenschwanzförmig ineinander greifen. Auch hier wird der Radialschlitten 38 von einer Gewindespindel 41 mit der Wandermutter 42 angetrieben. Der zugehörige Motor ist mit 39 und das entsprechende Getriebe mit 40 bezeichnet.

Auf dem Radialschlitten 38 ist eine Werkzeugplatte 43 befestigt, die die beiden Fräsköpfe 44 und 45 mit den Fingerfräsen 46 und 47 trägt. Dabei ist jedem Fräskopf ein Antrieb 48 mit einem Schneckengetriebe zugeordnet, das aus der Schnecke 49 und dem Schneckenrad 50 besteht. Die Antriebsmotoren 48 sind als Hydraulikmotoren ausgebildet, wozu die Hydraulikanschlüsse 51 bzw. 52 vorgesehen sind. - Der Tragrahmen 10 weist im übrigen zwei Montageöffnungen 10a auf, durch die hindurch die verfahrbaren Schlitten mit ihren Antriebseinrichtungen und die Fräsköpfe montiert werden und durch die hindurch die Fingerfräser nach außen gegen die Rohrwand gefahren werden können.

Benachbart zu den Fingerfräsern 46 und 47 können Fernsehkameras 53 und 54 angeordnet sein, mit denen die Positionierung des jeweiligen Fingerfräsers überwacht wird. Im übrigen können die Antriebseinrichtungen zum Drehen des Rahmens und zum Verschieben der Schlitten mit Weggebern ausgestattet sein, um die Positionierung des Fräswerkzeuges genau und reproduzierbar vornehmen zu können.

**Patentansprüche**

1. Manipulatorkopf zum fernbedienten Positionieren und Betreiben eines Werkzeuges im Innern eines Rohres oder einer Rohrleitung, bestehend
- aus zwei Stützflanschen (1, 2), die mit Führungselementen (3, 6) zur rollenden Fortbewegung des Manipulatorkopfes versehen sind,
- aus einem Werkzeugträger, der die beiden Stützflansche axial verbindet und in den Stützflanschen drehbar gelagert ist
- und aus einem an dem Werkzeugträger verschiebbar befestigten, sich drehenden Werkzeug (46, 47) zur mechanischen Bearbeitung der Innenwand des Rohres oder der Rohrleitung, wobei
- auf dem Werkzeugträger eine erste Antriebseinrichtung (32, 33, 34, 35) zur Axialverschiebung des Werkzeuges, eine zweite Antriebseinrichtung (39, 40, 41, 42) zur radialen Zustellung des Werkzeuges und eine dritte Antriebseinrichtung (48, 49, 50) für die Arbeitsbewegung des Werkzeuges angeordnet sind
- und an dem einen Stützflansch eine vierte Antriebseinrichtung (17, 18, 19, 20, 21, 22) zum Drehen des Werkzeugträgers relativ zu den Stützflanschen vorgesehen ist,
- und an den beiden Stützflanschen (1, 2), radial ausfahrbare, hydraulisch betätigbare Klemmvorrichtungen (4,5) zur Arretierung des Manipulatorkopfes vorgesehen sind,
**dadurch gekennzeichnet,**
daß zum Einsatz eines Fingerfräsers als Werkzeug
- der Werkzeugträger aus einem rohrförmigen, mit Montageöffnungen (10a) versehenen Tragrahmen (10) mit zwei stirnseitig anschließenden Lagerflanschen (11, 12) besteht,
- daß an der Innenwandung des Tragrahmens (10) eine axial verlaufende Führungsschiene (30) befestigt ist, auf der ein mit der ersten Antriebseinrichtung gekoppelter Schlitten (31) axial verfahrbar ist,
- daß an dem axial verfahrbaren Schlitten (31) eine weitere Führungsschiene (37) befestigt ist, die parallel zu einer Radialen des Manipulatorkopfes verläuft und auf der ein mit der zweiten Antriebseinrichtung gekoppelter Schlitten (38) radial verfahrbar ist,
- daß an dem radial verfahrbaren Schlitten (38) ein mit der dritten Antriebseinrichtung versehener Fingerfräser (44,46) befestigt ist, wobei der Fingerfräser seitlich der Achse und koaxial mit einer Radialen des Manipulatorkopfes angeordnet und einer Montageöffnung (10a) des rohrförmigen Rahmens (10) zugeordnet ist.
- und daß die vierte Antriebseinrichtung ein Schneckengetriebe aufweist, dessen Schneckenrad (16) auf der Außenseite des einen Stützflansches (1) axial an dem nach außen weisenden Ende des einen Lagerflansches (11) des rohrförmigen Rahmens befestigt ist und dessen Schnecke (22), Antriebsmotor (17) und Untersetzungsgetriebe (18) quer zur Achse des Manipulatorkopfes angeordnet sind, wobei der Antriebsmotor und das Untersetzungsgetriebe in Lagerböcken (23,24) gelagert sind, die das Schneckenrad (16) übergreifen.

2. Manipulatorkopf nach Anspruch 1, **dadurch gekennzeichnet,** daß an dem radial verfahrbaren Schlitten (38) zwei Fingerfräser (44,46; 45,47) mit jeweils einer eigenen Antriebseinrichtung (48,49,50) symmetrisch zur Achse des Manipulatorkopfes befestigt sind.

3. Manipulatorkopf nach Anspruch 1, **dadurch gekennzeichnet,** daß die erste und die zweite Antriebseinrichtung jeweils aus einem Elektromotor (34,39) mit einem Gewindespindel-Wandermutterantrieb (32,33; 41,42) besteht, dessen Wandermutter (33,42) in dem jeweiligen Schlitten (31,38) gelagert ist.

4. Manipulatorkopf nach Anspruch 1, **dadurch gekennzeichnet,** daß zum Antrieb der Fingerfräser (46,47) und zum Drehen des rohrförmigen Rahmens (10) Hydraulikmotoren vorgesehen sind.

5. Manipulatorkopf nach Anspruch 1, **dadurch gekennzeichnet,** daß die Führungsschienen (30,37) und die Schlitten (31,38) schwalbenschwanzförmig ineinander greifen.

**Claims**

1. Manipulator head for remote-control positioning and operation of a tool in the interior of a pipe or a pipe line, consisting
– of two supporting flanges (12), which are provided with guide elements (3, 6) for rolling movement of the manipulator head,
– of a tool carrier which axially connects both supporting flanges and is pivotally mounted on the supporting flanges,
– and of a rotating tool (46, 47) displaceably secured on the tool carrier, for mechanical treatment of the inner wall of the pipe or the pipe line, whereby
– arranged on the tool carrier there are a first drive arrangement (32, 33, 34, 35) for axial displacement of the tool, a second drive arrangement (39, 40, 41, 42) for radial feed adjustment of the tool and a third drive arrangement (48, 49, 50) for the operational movement of the tool,
– and provided on the one supporting flange there is a fourth drive arrangement (17, 18, 19, 20, 21, 22) for rotating the tool carrier relative to the supporting flanges,
– and on both supporting flanges (1, 2) there are provided radially withdrawable hydraulically activated clamping devices (4, 5) for arresting the manipulator head, characterised in that for use when the tool is a milling cutter
– the tool carrier consists of a tubular supporting frame (10) provided with assembly openings (10a) with two bearing flanges (11, 12) connected at the end faces,
– that on the inner wall of the carrier frame (10) an axially extending guide rail (30) is secured on which a carriage (31) coupled with the first drive arrangement is able to be conveyed axially,
– that a further guide rail (37) is secured on the axially conveyable carriage (31) which rail extends parallel to a radius of the manipulator head and on which a carriage (38) coupled with the second drive arrangement is able to be conveyed radially,
– that a milling cutter (44, 46) provided with the third drive arrangement is secured on the radially conveyable carriage (38) wherein the milling cutter is arranged laterally of the axis and coaxially with a radius of the manipulator head and is associated with an assembly opening (10a) of the tubular frame (10),
– and that the fourth drive arrangement has a worm drive, the worm wheel (16) of which is secured on the outer side of the one supporting flange (1) axially on the end directed outwards of the one bearing flange (11) of the tubular frame and the worm (22), drive motor (17) and reduction gearing (18) of which are arranged transverse to the axis of the manipulator head, wherein the drive motor and the reduction gearing are mounted in bearing blocks (23, 24), which are fastened over the worm wheel (16).

2. Manipulator head according to claim 1, characterised in that on the radially conveyable carriage (38) two milling cutters (44, 46; 45, 47) are secured symmetrically with respect to the axis of the manipulator head with in each case an individual drive arrangement (48, 49, 50).

3. Manipulator head according to claim 1, characterised in that the first and the second drive arrangement consists in each case of an electromotor (34, 39) with a lead screwtravelling nut drive (32, 33; 41, 42), the travelling nut (33, 42) of which is mounted in the respective carriage (31, 38).

4. Manipulator head according to claim 1, characterised in that hydraulic motors are provided for driving the milling cutter (46, 47) and for rotating the tubular frame (10).

5. Manipulator head according to claim 1, characterised in that the guide rails (30, 37) and the carriage (31, 38) interlock with each other in a dovetailed manner.

## Revendications

1. Tête de manipulateur servant à positionner et actionner par télécommande un outil à l'intérieur d'un tube ou d'une conduite tubulaire, constituée
— par deux brides de support (1, 2), qui comportent des éléments de guidage (3, 6) permettant un déplacement par roulement de la tête de manipulateur,
— par un porte-outil qui relie axialement les deux brides de support et qui est monté de façon à pouvoir tourner dans ces brides, et
— par un outil rotatif (46, 47), fixé de manière à être déplaçable sur le porte-outil et servant à réaliser l'usinage mécanique de la paroi intérieure du tube ou de la conduite tubulaire, et dans lequel
— sur le porte-outil sont prévus un premier dispositif d'entraînement (32, 33, 34, 35) pour le déplacement axial de l'outil, un second dispositif d'entraînement (32, 40, 41, 42) pour l'avance radiale de l'outil et un troisième dispositif d'entraînement (48, 49, 50) pour le déplacement de travail de l'outil, alors que
— sur l'une des brides de support, il est prévu un quatrième dispositif d'entraînement (17, 18, 19, 20, 21, 22) servant à faire tourner le porte-outil par rapport aux brides de support, et
— sur les deux brides de support (1, 2), il est prévu des dispositifs de serrage (4, 5) qui peuvent être dégagés radialement, qui peuvent être actionnés par voie hydraulique et qui servent à bloquer la tête de manipulateur, caractérisée par le fait que pour l'utilisation d'une fraise à queue en tant qu'outil
— le porte-outil est constitué par un cadre de support tubulaire (10) pourvu d'ouvertures de montage (10a) et comportant deux collets de support (11, 12), qui sont raccordés frontalement,

— qu'à la paroi intérieure du cadre de support (10) est fixé un rail axial de guidage (30), sur lequel un chariot (31), accouplé au premier dispositif d'entraînement, peut se déplacer axialement,
— que sur le chariot déplaçable axialement (31) est fixé un autre rail de guidage (37), qui s'étend parallèlement à un rayon de la tête de manipulateur et peut se déplacer radialement sur le chariot (38) accouplé au second dispositif d'entraînement,
— que sur le chariot déplaçable radialement (38) est fixée une fraise à queue (44, 46) équipée du troisième dispositif d'entraînement, la fraise à queue étant disposée latéralement par rapport à l'axe et coaxialement à un rayon de la tête de manipulateur et associée à une ouverture de montage (10a) du cadre tubulaire (10), et
— que le quatrième dispositif d'entraînement comporte un mécanisme à vis sans fin, dont la roue à vis sans fin (16) est fixée axialement, sur le côté extérieur d'une bride de support (1), sur l'extrémité, dirigée vers l'extérieur, d'un collet de support (11) du cadre tubulaire et dont la vis sans fin (22), le moteur d'entraînement (17) et la transmission démultiplicatrice (18) sont disposés transversalement par rapport à l'axe de la tête de manipulateur, le moteur d'entraînement et la transmission démultiplicatrice étant tourillonnés dans des carters de paliers (23, 24), qui enveloppent la roue à vis sans fin (16).

2. Tête de manipulateur selon la revendication 1, caractérisée en ce que deux fraises à queue (44, 46; 45, 47) comportant chacune un dispositif particulier d'entraînement (48, 49, 50) sont vissées et fixées symétriquement par rapport à l'axe de la tête de manipulateur sur le chariot (38) déplaçable radialement.

3. Tête de manipulateur suivant la revendication 1, caractérisée par le fait que les premier et second dispositifs d'entraînement sont constitués chacun par un moteur électrique (34, 39) comportant un dispositif d'entraînement (32, 33; 41, 42) à broche filetée et écrou mobile, dont l'écrou (33, 42) est monté dans le chariot respectif (31, 38).

4. Tête de manipulateur suivant la revendication 1, caractérisée par le fait qu'il est prévu des moteurs hydrauliques pour l'entraînement des fraises à queue (46, 47) et pour la rotation du cadre tubulaire (10).

5. Tête de manipulateur suivant la revendication 1, caractérisée par le fait que les rails de guidage (30, 37) et les chariots (31, 38) s'interpénètrent réciproquement selon une liaison en queue d'aronde.

FIG. 1

FIG. 2

FIG. 3

FIG. 4

FIG. 5

FIG. 6